# EUROPEAN PATENT APPLICATION

(11) **EP 4 737 770 A1**
(43) Date of publication of application: **06.05.2026**
(21) Application number: 25207167.5
(22) Date of filing: 07.10.2025
(51) Int. Cl.: F16K 1/08, F16K 1/52, F16K 27/02, F24D 19/10, G05D 16/00

(54) **CONSTANT DIFFERENTIAL PRESSURE VALVE WITH FLUID FLOW SHIELDING WALL**

(30) Priority: 31.10.2024 DE 102024131794; 26.02.2025 DE 102025107228
(71) Applicant: Danfoss A/S, 6430 Nordborg (DK)
(72) Inventor: PAPEZ, Primoz, 1210 Ljubljana-Sentvid (SI); SLOKAR, Jan, 1210 Ljubljana (SI); BELAKAPOSKI, Jovan, 1210 Ljubljana (SI); OVTAR, Domen, 1210 Ljubljana (SI); THALER, Tilen, 1210 Ljubljana (SI)
(74) Representative: Nestler, Jan Hendrik

(57) **Abstract**

The invention relates to a constant differential pressure valve arrangement (3). The housing (4) of the constant differential pressure valve arrangement (3) comprises a fluid transfer chamber (26) for the shutter member (27) of the constant differential pressure valve arrangement (3). A shielding wall member (39) is arranged between the fluid transfer chamber (26) and the shutter member (27). The shielding wall member (39) is designed and arranged in a way that it at least significantly reduces dynamic fluid flow forces in the gap (37) between the shielding wall member (39) and the shutter member (27).

## Description

The invention relates to a housing for a variable fluid flow throughput valve arrangement, preferably for a constant differential pressure valve arrangement, wherein the housing comprises a fluid transfer chamber for the shutter member of the variable fluid flow throughput valve arrangement.

The invention also relates to a variable fluid flow throughput valve arrangement.

Further, the invention relates to a control valve arrangement, comprising at least a variable fluid flow throughput valve arrangement and at least an additional valve arrangement.

Variable fluid flow throughput valves are well known and widely used in the prior art. They are used when a fluid flow has to be controlled with respect to its flux (volume per time unit). Such a variation in the fluid flux may be required for various reasons, for example to provide a certain, desired flux through the valve, to realise a certain pressure difference over the valve, or the like.

Due to the widespread use of such variable fluid flow throughput valves, it is no surprise that a wide variety of different designs have been suggested that all show certain advantages and disadvantages. Depending on the situation, certain basic designs are usually preferred over the other.

In particular, when it comes to constant differential pressure valve arrangements usual designs show a circumferentially arranged fluid transfer chamber, where the fluid transfer chamber provides or collects the fluid to be controlled around a usually also circumferentially designed movable shutter member. Further, a pressure reference chamber is provided that is fluidly connected to a different part of the valve by means of a fluid conduit. This way, the position of the shutter member is influenced by the pressure difference between its upper side (fluidly connected to the fluid transfer chamber, fluid inlet conduit, interconnecting fluid conduit) and its lower side. To avoid any fluid losses between the two sides of the shutter member, without introducing any unnecessary frictional forces, typically an additional flexible sealing member seals of the two sides of the shutter member.

In principle, such constant differential pressure valves with cylindrical shutter members work admittedly well in practice, and are consequently widely employed.

However, such constant differential pressure valves still are deficient when it comes to control quality, i.e. the quality of the variation of the differential pressure that is achieved by the controlling behaviour of the constant differential pressure valve are still somewhat inferior. Another issue is that such designs with a cylindrical shutter member and a flexible membrane are prone to agglomeration of dirt near the membrane, so that they have a comparatively short maintenance interval.

It is no surprise that such a behaviour is undesired and that there is a desire in the present technical field to remove such problems, or at least to reduce such problems.

It is therefore an object of the present invention to suggest a housing for a variable fluid flow throughput valve arrangement, preferably for a constant differential pressure valve arrangement, wherein the housing comprises a fluid transfer chamber for the shutter member of the variable fluid flow throughput valve arrangement, that is improved over such housings as they are known in the prior art.

It is another object of the present invention to suggest a variable fluid flow throughput valve arrangement, in particular a constant differential pressure valve arrangement, that is improved over variable fluid flow throughput valve arrangements as they are known in the prior art.

It is yet another object of the present invention to provide a control valve arrangement that is improved over control valve arrangements as they are known in the prior art.

A housing for a variable fluid throughput valve arrangement according to claim 1 and/or a variable fluid flow throughput valve arrangement according to claim 9 and/or a control valve arrangement according to claim 14 solve these objects, respectively.

It is suggested to design a housing for a variable fluid flow throughput valve arrangement, preferably a housing for a constant differential pressure valve arrangement, the housing comprising a fluid transfer chamber for the shutter member of the variable fluid flow throughput valve arrangement, in a way that a shielding wall member is provided between the fluid transfer chamber and the shutter member, wherein the shielding wall member is designed and arranged in a way that it at least significantly reduces dynamic fluid flow forces in the gap between the shielding wall member and the shutter member.

The variable fluid flow throughput valve, and consequently the variable fluid flow throughput valve arrangement, can be designed according to any suitable design that is around in the prior art. In particular, the variable fluid flow throughput valve can be designed and arranged as a movable shutter valve (where the movable shutter may comprise an essentially circular design/cylinder barrel like design, in particular for the shutter), or the like. Such designs are, as such, known in the prior art. As an example, they are used for constant differential pressure valve arrangements, in which the distance between the shutter member and its corresponding valve seat/shutter member seat (and therefore the size of the throughput orifice) varies in dependence of a pressure differential, for example a pressure differential between a top side of the shutter member (being essentially at the pressure level of the variable fluid flow throughput valve's input conduit/of the fluid transfer chamber) and its bottom side (being essentially at the pressure of a pressure reference chamber that is arranged below the shutter member). Typically, they open with increasing pressure difference, leading to a larger fluid flux through the orifice, which in turn tends to a decrease of the pressure difference (or vice versa). However, the opposite behaviour is regularly used as well. In particular, if the constant pressure difference valve is used in combination with a variable poppet valve, it might be advantageous if the constant pressure difference valve closes when the pressure difference increases. Then, the purpose is to provide a constant fluid flux through the poppet valve/the constant pressure difference valve combination, irrespective of any varying pressure difference over the whole arrangement. For the actual control behaviour, typically no external influence is necessary. This, however, does not rule out the possibility to (manually) adjust the variable fluid flow throughput valve arrangement, for example to adapt it to certain machinery, the valve arrangement is used in. Also, actuators may be used as some kind of an override functionality (for example to effectuate a safety stop), or to perform some fine tuning. Also, both "add-on possibilities" are possible.

The fluid transfer chamber collects fluid toward the fluid output conduit or distributes fluid, coming from a fluid input conduit. The inventors realised that such flows (surprisingly irrespective of whether it is an inward flow or an outward flow) generally have, at least at times, a directional part that is directed towards a gap between the shutter member and its neighbouring part of the housing. However, a housing for a variable fluid flow throughput valve arrangement/a variable fluid flow throughput valve according to the present disclosure may be preferably designed and arranged in a way that the fluid enters the fluid transfer chamber in an axial direction (intended/designated/axial movement direction of the shutter member), since then the intrinsic properties and advantages of the housing/valve will usually be particularly profound. This creates fluid dynamic forces that adversely and possibly erratically influence the position of the shutter member. In principle, the best control quality can be achieved if only static fluid forces do have an influence on the position of the shutter member. While an influence by dynamic forces can never be fully avoided, the inventors found that dynamic influences created by fluid flows that are directed towards the gap between the shutter member and the neighbouring part have a surprisingly large influence on the position of the shutter member. Additionally, such fluid flows contribute surprisingly strongly towards the deposition of dirt and other particles in this gap, which will eventually lead to a blockage of the shutter member (or at least to adversely influencing frictional forces). It seems that those disadvantages have already (possibly unintentionally) dealt with by experience in that according to the prior art, the gap with the outer circumferential surface of the shutter member and the inner circumferential surface of the housing was made very small. In particular, the width of the gap was chosen to be less than 0.1 mm, 0.2 mm, 0.3 mm, 0.4 mm, 0.5 mm, 0.6 mm, 0.7 mm, 0.8 mm, 0.9 mm or 1 mm. As a lower limit, the width of the gap was usually chosen in a way that frictional forces/grinding between the two parts was avoided, at least under usual operational conditions (with the exception of a sealing section). Namely, the lower limit was usually 0.05 mm, 0.1 m, 0.15 mm or 0.2 mm.

Therefore, the inventors suggest to provide a shielding wall member between the fluid transfer chamber and the shutter member that is designed and arranged in a way that it at least significantly reduces dynamic fluid flow forces in the gap between the shielding wall member and the shutter member. Consequently, a surprisingly large increase of the control preciseness of the resulting variable fluid flow throughput valve arrangement can be achieved. Furthermore, the time span between two maintenance processes due to an agglomeration of dirt and other particles can likewise be prolonged surprisingly significantly. The shielding wall member may be designed and arranged in a way to consider typical fluid flow patterns and fluid flow speeds that occur in the resulting variable fluid flow throughput valve arrangement when it is used in its intended machinery under somewhat usual operational conditions. Such optimisations can nowadays be performed comparatively easily using fluid dynamic calculation programs (using finite element analysis and the like). During such an optimisation, one should not only consider an increase of the pressure within the gap due to the fact that a fluid stream is partially directed into the gap, thus increasing the pressure. Additionally or alternatively, also pressure decreases in the gap should be avoided that can occur due to fastly passing fluid streams at the end section of the gap that can lead to a pressure decrease due to the Venturi effect. Because of the advantageous effects of the shielding wall member, it is possible to relax the so far comparatively strict requirements for the width of the gap (a so-to-say wider gap/wider range of widths for the gap). Hence, less machining preciseness may be necessary, which may result in cost reductions. While it is possible to use the same range of gap widths as described above, it is now possible to use a range of widths with 0.05 mm, 0.1 m, 0.15 mm, 0.2 mm, 0.3 mm, 0.4 mm, 0.5 mm, 0.6 mm, 0.7 mm, 0.8 mm, 0.9 mm or 1 mm as a lower limit and/or 0.1 m, 0.15 mm, 0.2 mm, 0.3 mm, 0.4 mm, 0.5 mm, 0.6 mm, 0.7 mm, 0.8 mm, 0.9 mm, 1 mm, 1.5 mm, 2 mm, 2.5 mm, 3 mm, 4 mm or 5 mm (or even more) as an upper limit.

It is suggested to design and arrange the housing in a way that the fluid transfer chamber and/or the shutter member are designed and arranged circumferentially. This way, the required forces to move the shutter member may be decreased and/or the required distances, by which the shutter member has to be moved may be comparatively small, and nevertheless a high maximum fluid flow throughput may be effectuated and/or a large variation of the fluid flow throughput (fluid flux) may be achieved. Further, the amount of material that is required for the shutter member may be reduced, even significantly reduced, in particular if the shutter member is designed to show somewhat thin walls that surround a recess. This not only saves costs, but also weight for the final product.

Yet further it is suggested to design and arrange the housing in a way that the fluid transfer chamber is designed and arranged as a toroid-shaped chamber and/or in that the shutter member is designed and arranged as an essentially rotationally symmetric member, preferably as a cup-shaped member. A toroid-shaped chamber may mean that the cross-section of the chamber may show essentially any type of shape, for example ellipsoidal shapes, rectangular shapes, quadratic shapes, hexagonal shapes, general n-edged shapes (possibly with rounded edges in any of the aforementioned cases), and the like. This way, typically the fluid flow throughput can be increased (in particular with a certain, distinct available mounting volume for the valve arrangement). Using a rotationally symmetric member is particularly advantageous (but not limited to this case), if a toroid-shaped fluid transfer chamber is present, due to geometrical reasons. Even further, the machining of a rotationally symmetric shutter member may be comparatively simple. If the shutter member is cup-shaped, this simplifies the movement of the shutter member due to pressure differences (particularly pressure differences between the upper side of the cup-shaped shutter member and the bottom side of the cup-shaped shutter member).

Even further, it is suggested to design and arrange the housing in a way that around the fluid transfer chamber and the shielding wall member the housing is designed and arranged as a single piece body. This way, the fluid flow patterns may be improved and turbulence may be avoided. This is because when using separate pieces, surface displacements, gaps and the like can never be avoided, resulting in a distortion of fluid flow patterns and the creation of turbulence, in turn adversely influencing the control preciseness of the variable fluid flow throughput valve arrangement. Further, the manufacture of the housing may even be simplified and/or the stability and lifetime of the resulting housing may be increased.

Even further, it is suggested to design and arrange the housing in a way that it is produced by at least a casting step, possibly by a casting step with a consecutive material removing manufacturing step. This way, an effective production of the housing can be realised. Further, standard tools and standard machine tools may be employed for producing the housing. Obviously, if the casting is precise enough that no additional material removing manufacturing step is needed, this can be more cost efficient.

It is further suggested to design and arrange the housing in a way that the housing comprises a metal or metal alloy, at least in the vicinity of the circumferentially arranged fluid transfer chamber. In particular, the shielding wall may comprise metal or metal alloy. This way, a particularly long lifetime of the housing/shielding wall (and therefore of the resulting variable fluid flow throughput valve arrangement) can usually be achieved. This may apply to the shutter member or the like as well. In particular, the housing may be produced by casting techniques (even when using a different material). For completeness, it should be noted that the housing may also comprise a plastic material, resin, fiber reinforced plastic material or the like. Irrespective of the material, the housing may even essentially consist of one or a mixture of the indicated materials.

It is further possible to design and arrange the housing in the way that the fluid conduit is mainly aligned in a radial direction and may possibly comprise a tilting angle towards the axial direction and/or a tilting angle towards the tangential direction. In particular, at least one tilting angle is preferably an acute angle (either for the axial direction, for the tangential direction, or both). It is to be noted that this tilting angle may relate to an average angle of the respective conduit (including the case that no tilting angle is present). That is, the conduit may show a tapering or a funnel like appearance. It is further to be noted that in particular the tilting angle towards the axial direction may show a comparatively large size, even in the order of up to 20°, 25°, 30°, 35°, 40°, 45° or 50°.

Further, it is suggested to design and arrange the housing in a way that the height of the shielding wall member is between 30 and 70%, preferably between 40 and 60%, even more preferably between 45% and 55% of the height of the fluid outlet chamber surrounding the shielding wall member. First experiments show that these design parameters typically yield good results, both with respect to a still very high maximum fluid flow throughput and/or with respect to a good control behaviour of the resulting variable fluid flow throughput valve arrangement. As already mentioned, the distance between the inner circumferential surface of the shielding wall member and the outer circumferential surface of the shutter member (the gap between those parts) can be chosen as described above (in particular according to the wider range of possible widths for the gap).

Yet further, a variable fluid flow throughput valve arrangement is suggested, wherein the variable fluid flow throughput valve arrangement comprises a shutter member and a housing according to the present disclosure. In particular, the variable fluid flow throughput valve arrangement may be designed and arranged to be a constant differential pressure valve arrangement. The resulting variable fluid flow throughput valve arrangement may then show the presently described features, characteristics and advantages as well, at least in analogy. Further, it is possible to modify the variable fluid flow throughput valve arrangement in the presently described sense as well, at least in analogy. As mentioned, in particular it is possible to design and arrange the variable fluid flow throughput valve arrangement in a way that the designated fluid flow direction is chosen in a way that the inward fluid flow enters the fluid transfer chamber in an axial direction of the shutter member, and being initially directed towards the shutter member.

In particular, the variable fluid flow throughput valve arrangement may be designed and arranged in a way that the shutter member comprises at least two sections with different radii, in particular at least two cylinder barrel like shaped sections with different radii. Usually, the part of the shutter member that faces its corresponding valve seat and/or that is arranged to distant from the base plate (in particular in case of a cup-shaped shutter member) will show the larger radius. Typically, the increase of the radius is quite small and does not exceed 5%, 7.5%, 10%, 12.5% or 15% of the radius of the shutter member (larger radius or smaller radius). A minimum change might be envisaged as well, in particular 1%, 2%, 3% or 4% of the radius of the shutter member. Such a design might be used to narrow the gap, so that the influences of dynamic fluid forces on the control behaviour of the resulting variable fluid flow throughput valve arrangement may be further reduced. Nevertheless, in case a membrane is used (as further suggested, in particular), the required extent of a bending of the membrane can nevertheless be quite small. The width of the gap may be chosen as described above. In particular, there might be a wider gap (with a width that is chosen from the broader range of possible widths of the gap) and a smaller gap (with a width that is chosen from the stricter/smaller range of possible widths of the gap).

In particular, it is possible to design and arrange the variable fluid flow throughput valve arrangement in a way that the constant differential pressure valve, in particular the height of the shielding wall member and the position of the change of the radius of the shutter member, are designed and arranged in a way that the shielding wall covers the larger sized part of the shutter member in any position of the shutter member. Again, this results in a small gap between the shutter member and the surrounding shielding wall, reducing the influence of dynamic fluid forces on the control preciseness of the resulting valve arrangement, in particular under essentially all operational conditions of the variable fluid flow throughput valve arrangement.

Yet further, it is suggested to design and arrange the fluid flow throughput valve arrangement in a way that the shutter member fluidly separates a fluid transfer chamber and a pressure reference chamber, wherein preferably a flexible membrane is provided between the shutter member and the housing. Using such a design (where the basic, underlying idea as such is known in the prior art, and the therein suggested design ideas can be applied for the present context as well), a very advantageous control behaviour of the resulting fluid flow throughput valve arrangement can be realised.

Even further, it is suggested to design and arrange a variable fluid flow throughput valve arrangement in a way that the shutter member is designed and arranged to move in an axial direction. Again, such a design might prove to be particularly advantageous.

Even further, a control valve arrangement is suggested that comprises at least one variable fluid flow throughput valve arrangement and/or at least one additional valve arrangement, preferably at least one variable fluid flow throughput valve arrangement and at least one poppet valve, wherein the variable fluid flow throughput valve arrangement is designed and arranged as a variable fluid flow throughput valve arrangement according to the present disclosure. Possibly, the additional valve may also be designed and arranged as a variable fluid flow throughput valve arrangement, in particular as a variable fluid flow throughput valve arrangement according to the present disclosure. Such control valve arrangements are frequently used in the prior art. In particular, the control valve arrangements are used in a way that at least two valve/valve arrangements are fluidly arranged in series, so that the respective valves are passed by the fluid one after the other. Further, the presently suggested housing/variable fluid flow throughput valve arrangement/control valve arrangement may then show its intrinsic characteristics particularly well.

Further advantages, features, and objects of the invention will be apparent from the following detailed description of the invention in connection with the associated drawings, wherein the drawings show:
- Fig. 1:: a possible embodiment of a control valve arrangement in a cut-open perspective view;
- Fig. 2:: a first cross-sectional view through the poppet valve part of the control valve arrangement of Fig. 1;
- Fig. 3:: a different, second cross-sectional view through the control valve arrangement of Figs. 1 and 2;
- Fig. 4:: a cross-sectional view according to Fig. 3 through a control valve arrangement partially according to the prior art;
- Fig. 5:: a plot, showing the measured behaviour of the fluid flow in dependence of the pressure difference of the poppet valve part of the control valve arrangement according to Figs. 1, 2 and 3 and according to Fig. 4;
- Fig. 6:: the scale indicator part of the poppet valve of the control valve arrangement according to Figs. 1, 2 and 3 in a perspective view;
- Fig. 7:: an enlarged, schematic, cross-sectional perspective view of the constant differential pressure valve of the embodiment of the control valve arrangement according to Figs. 1, 2, 3 and 5;
- Fig. 8:: an enlarged, schematic, cross-sectional top view of the constant differential pressure valve of the embodiment of the control valve arrangement according to Figs. 1, 2, 3, 5 and 7;
- Fig. 9:: a schematic perspective view of the shutter member of the constant differential pressure valve part of the control valve arrangement according to Figs. 1, 2, 3, 5, 7 and 8, mainly seen from the side;
- Fig. 10:: a schematic bottom view of the shutter member of the constant differential pressure valve part of the control valve arrangement according to Figs. 1, 2, 3, 5, 7, 8 and 9;
- Fig. 11:: an enlarged schematic cross-section through the orifice region of the constant differential pressure valve part of the control valve arrangement according to Figs. 1, 2, 3, 5, 7, 8, 9 and 10 in an open state;
- Fig. 12:: an enlarged schematic cross-section through the orifice region of the constant differential pressure valve part of the control valve arrangement according to Figs. 1, 2, 3, 5, 7, 8, 9, 10 and 11 in a closed state;
- Fig. 13:: another enlarged, schematic, cross-sectional view of the constant differential pressure valve of the embodiment of the control valve arrangement according to Figs. 1, 2, 3, 5, 7, 8, 9, 10, 11 and 12, focusing on different aspects of the constant differential pressure valve;
- Fig. 14:: a schematic perspective view on the fluid flow guiding plate part of the constant differential pressure valve, as shown in Fig. 13;
- Fig. 15:: a schematic perspective view of the bell-shaped fluid guiding plate that is used for a constant differential pressure valve, as shown in Figs 13 and 14.

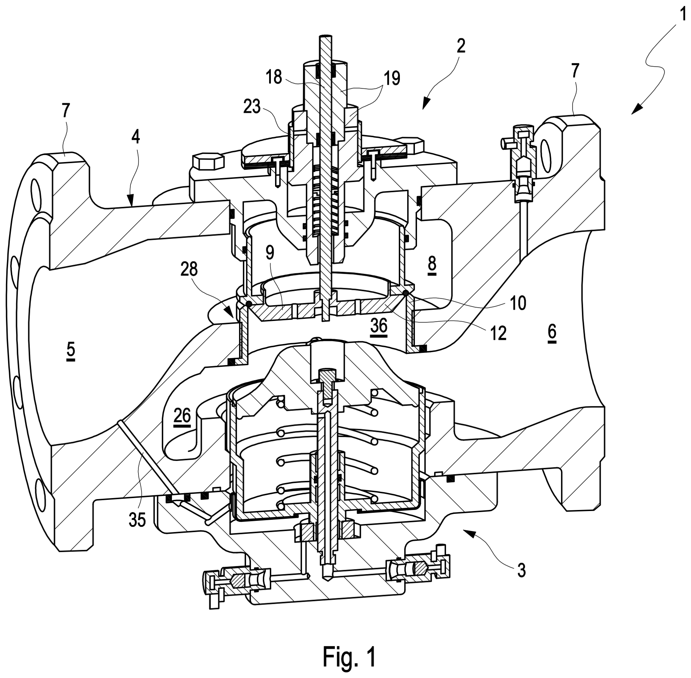

Fig. 1 shows a schematic perspective view of a cut open control valve arrangement 1 according to a first, possible embodiment of a control valve arrangement.

The control valve arrangement 1 generally comprises a poppet valve part 2 (which is, in generic terms, a variable fluid flow throughput valve) and a constant differential pressure valve part 3 that are fluidly arranged in series. Hence, fluid to be controlled by the control valve arrangement 1 enters the housing 4 of the control valve arrangement 1 via fluid inlet channel 5, passes through the poppet valve part 2, then through the constant differential pressure valve part 3 and finally leaves the housing 4 of control valve arrangement 1 via fluid outlet channel 6. At both the fluid inlet channel 5 and the fluid outlet channel 6, a flange 7 is presently provided, so as to facilitate a reversible fluid tight connection with corresponding feeding and discharging tubes or hoses.

As can further be seen in Fig. 1, 2 and 3, in the presently shown embodiment, the fluid inlet channel 5 and the fluid outlet channel 6 are protruding radially from the respective circular fluid transfer chambers 8, 26. However, with respect to the axial direction of the control valve arrangement 1, both fluid channels 5, 6 show a funnel like shape, where the averaged direction of the respective fluid channel 5, 6 is bent towards the axial direction by presently around 15°.

Only as a matter of completeness: between the poppet valve part 2 and the constant differential pressure valve part 3, the fluid flows in an essentially axial direction. Consequently, in the region (and past) the valve seat 10 of the poppet valve part 2 and/or in the region (and before) the valve seat 28 of the differential pressure valve part 3 and/or within the interconnecting fluid channel 36, the fluid flows in an essentially axial direction of the poppet valve 2 and/or of the constant differential pressure valve 3.

Further for completeness: it is also possible that fluid passes through the control valve arrangement 1 in an opposite direction (where it is possible that the fluid flow direction might change from time to time, depending on the operational state of the machinery, the control valve arrangement 1 is used for).

The fluid inlet channel 5 feeds the poppet valve part 2 by means of an essentially circular fluid inlet chamber 8 that is circularly arranged around the axially movable poppet 9 of poppet valve 2. By means of an axial movement of valve poppet 9, the poppet 9 may contact or may be lifted off its valve seat 10, thus providing a fluid throughput orifice 13 of a variable size. This, as such, is known in the prior art.

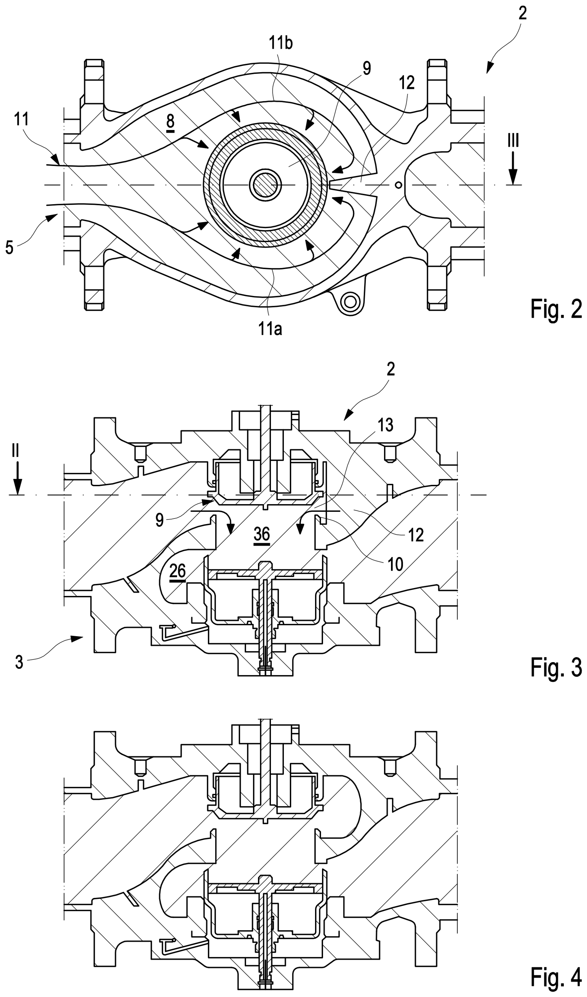

More details of the poppet valve part 2 of control valve arrangement 1 will now described with particular reference to Figs. 2, 3, 4 and 5.

Figs. 2 and 3 show more details of the poppet valve section 2 in different cross-sectional views, namely from the top (Fig. 2) and from the side (Fig. 3).

The fluid flow 11 that is entering the poppet valve part 2 of the control valve arrangement 1 via fluid inlet channel 5 splits up into two parts 11a, 11b that flow around the valve poppet 9 of poppet valve part 2 inside of (essentially) circular fluid inlet channel 8. Along its way, the respective parts 11a, 11b of the fluid flow 11 will pass, in part, through the various section of the fluid orifice 13 that is generated by the valve poppet 9 and the corresponding valve seat 10, when the valve poppet 9 is (partially or fully) lifted off its valve seat 10 (indicated in Fig. 3). Presently, a single, wedge-shaped separating wall 12 is arranged within the circular fluid inlet channel 8. Thanks to the separating wall 12, the two parts 11a, 11b of the fluid flow 11 in the circular fluid inlet channel 8 have a defined length, along which the fluid 11 may flow.

According to prior art designs, where no separating wall 12 is provided (shown in Fig. 4, which is the situation analogue to Fig. 3, where, however, the separating wall 12 is missing) the two fluid flow parts 11a, 11b will "collide head-on" somewhere near the location, where in Figs. 2 and 3 the separating wall 12 is present. However, the position of the collision of the fluid flow parts 11a, 11b is not defined; rather, the position will change within a certain region erratically (typically within a sector of ±10° or ±20°).

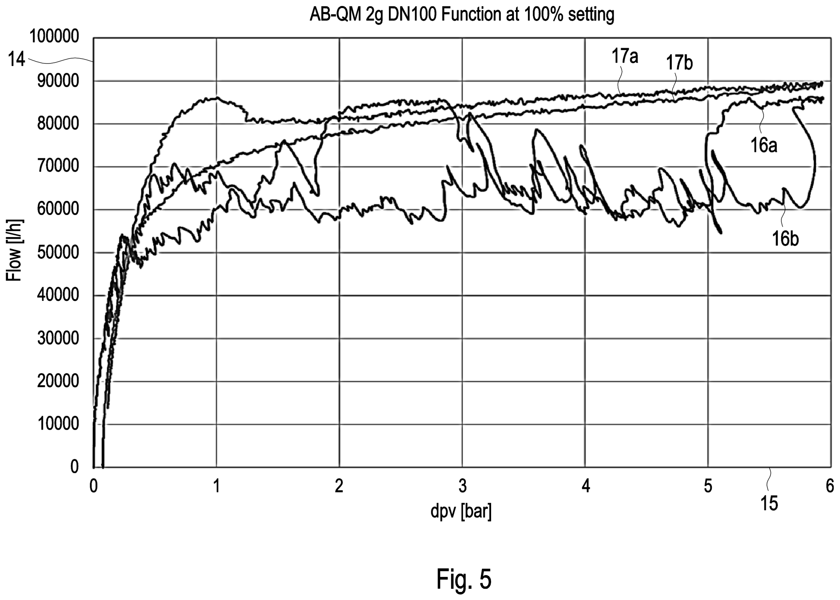

This variation of the collision point over time will result in severe fluctuations of the fluid flow (in litres per hour) 14, as shown on the ordinate 14 of Fig. 5, in dependence of the pressure differential (in bars) 15 of poppet valve 2, which is plotted along the abscissa 15 of Fig. 5. In particular, two sample runs 16a, 16b are shown in Fig. 5, where no separating wall 12 was used (situation according to Fig. 4). Further, two sample runs 17a, 17b are shown in Fig. 5, where a separating wall 12 was used. The improvement in the monotonic increase of fluid flow 14 in dependence of pressure difference 15 is obvious.

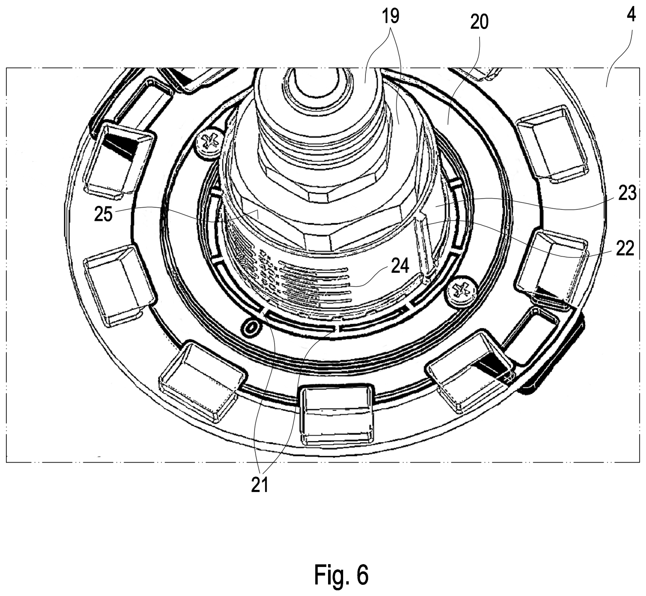

Presently, the poppet 9 of the poppet valve 2 is adjusted manually. For this, a hand wheel or a hexagonally shaped surface 25 (for attachment of a wrench) or the like can be used (in the presently depicted embodiment, a hexagonally shaped surface 25 for attachment of a wrench is used; see Fig. 6). This hexagonally shaped surface 25 is an integral part of the rotating sleeve 19 of poppet valve 2. More details can be seen from the perspective view of Fig. 6.

The rotating sleeve 19 comprises an inner thread that engages with a correspondingly arranged outer thread of the poppet stem 18 of poppet valve 2. This way, a rotating motion of the rotating sleeve 19 is translated into an axial linear movement of poppet stem 18, and hence of poppet 9, so that the poppet 9 can be placed onto the valve seat 10, or placed at a distance of the valve seat 10, generating a correspondingly large valve orifice 13.

By means of a torque proof connection, the rotating sleeve 19 is connected to a scale plate 20 on which a circular scale 21 with altogether ten tick marks is arranged. Therefore, by placing the desired tick mark near a protruding bar 22 (or another suitable indicator), the current rotational position of the poppet 9 relative to the valve seat 10 can be read. It is to be noted that the protruding bar 22 is provided on a non-rotating sleeve 23, where the non-rotating sleeve 23 is connected to the housing 4 in a torque-proof manner. Hence, non-rotating sleeve 23 and rotating sleeve 19 will rotate relative to each other on an actuation of the hexagonally shaped surface 25 of rotating sleeve 19 (or the like).

As can be also seen in Fig. 6, a second, linear scale 24 is provided on the outside of the non-rotating sleeve 23. Since the non-rotating sleeve 24 is arranged on control valve arrangement 1 in a way that it moves linearly together with the poppet stem 18, it will move axially, relative to the scale plate 20.

In the present embodiment, the engaging threads of poppet stem 18 and rotating sleeve 19 are arranged in a way that ten full turns of the rotating sleeve 19 will bring the poppet 9 of poppet valve 2 from its fully closed position to its fully open position (or vice versa).

Therefore, it can be easily understood that the circular scale 21 on the scale plate 20 is equivalent to a fine scale, where each tick of the circular scale 21 (ten ticks in total) corresponds to a 1% change of the size of the axial position of the poppet 9 of poppet valve 2. The linear scale 24 on the fixed sleeve 23, however, will show a coarse indication, where one mark is equivalent to a 10% change of the axial position of the poppet 9 of poppet valve 2.

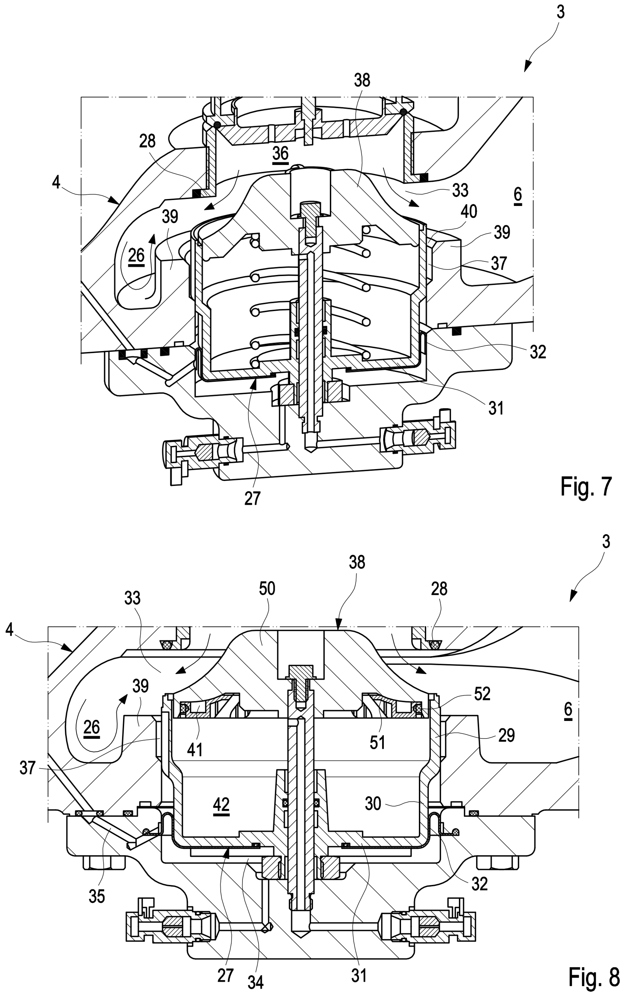

Figs. 7 and 8 show the constant differential pressure valve part 3 (which is generically speaking again a variable fluid flow throughput valve arrangement) of the control valve arrangement 1 in more detail. Fig. 7 shows the situation in an enlarged schematic perspective cross-sectional view, while Fig. 8 shows an enlarged cross-sectional top view of the constant differential pressure valve arrangement 3. The fluid that comes from the poppet valve part 2 flows towards the constant differential pressure valve part 3 by means of the comparatively short interconnecting fluid channel 36. The fluid then flows through the orifice 33 of the constant differential pressure valve 3 (constant differential pressure valve 3 open in the views of Figs. 7 and 8), and consequently into circumferentially arranged fluid outlet chamber 26 and finally into radially aligned fluid outlet channel 6 of the control valve arrangement 1.

In the presently shown embodiment, there are different gaps 37 with essentially two different widths provided between the outside surface of shutter member 27 and the inside surface of housing 4/shielding wall 39. The wider gaps (above and below the section with the narrow gap) are presently designed with a width of 1 mm, while the narrow gap is presently designed with a width of 0.1 mm.

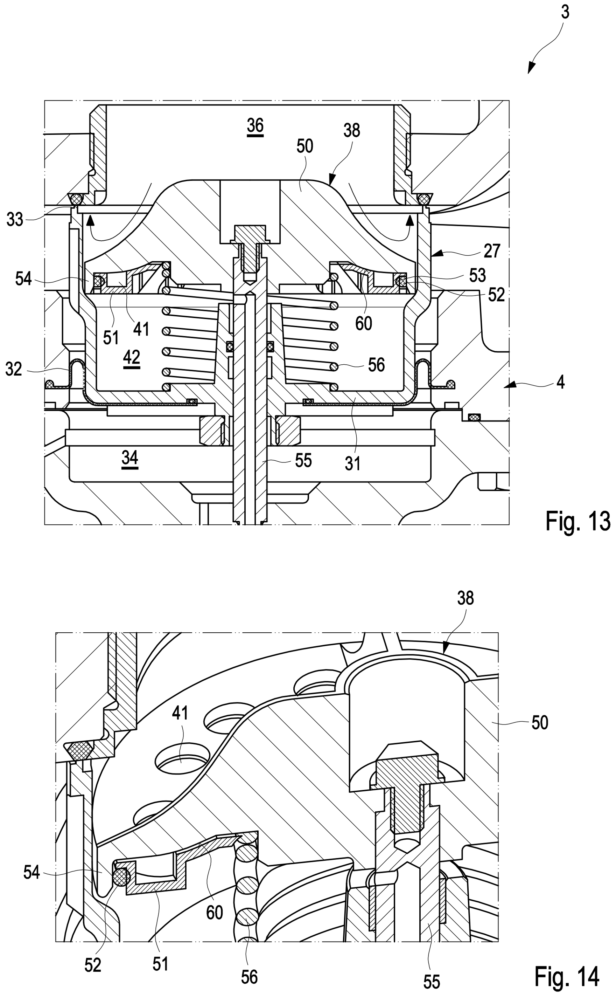

The bell-shaped fluid guidance plate 38 (will be described in more detail further below) will guide the fluid flow in the direction of the fluid outlet chamber 26 and away from the entrance opening 40 of the gap 37 between the outside surface of shutter member 27 and the inside surface of housing 4/shielding wall 39. The principal flow pattern is indicated in Figs. 7 and 8 by arrows for an open position of the shutter member 27. For a partially closed position of the shutter member 27 (in which the constant differential pressure valve 3 will be for most of the time under usual operating conditions), the fluid guidance plate 38 will direct the incoming fluid flow in a way that it will impinge on the inside wall of the shutter member 27 in an essentially perpendicular direction (see Fig. 13). Then, the fluid will pass through the narrow orifice 33 of the constant differential pressure valve 3 and will be directed away from the gap 37/the entrance 40 of gap 37 by virtue of the shielding wall 39 similar to the situation as shown in Figs. 7 and 8.

Now the radially outer wall of circumferential fluid outlet chamber 26 would redirect the fluid flow directly towards the outside surface of the shutter member 27, thus creating an increased dynamic fluid pressure in this region, were it not for the shielding wall 39. Thanks to the shielding wall 39, however, the fluid flow is redirected in an upward direction and clearly away from the gap 37/the entrance opening 40 of gap 37. Thanks to the realised flow pattern, at the entrance port 40 of the gap 37, and therefore at the gap 37 itself, no significant fluid flows and/or significant dynamic fluid pressures are present. Therefore, the control behaviour of the shutter member 27 is significantly improved.

It is also to be noted, that thanks to the bell-shaped fluid guiding plate 38 (that comprises a plurality of bores 41, to allow a compensating fluid flow between the inner volume 42 of shutter member 27 and fluid outlet chamber 26 when the shutter member 27 moves up and down), the pressure in the inner volume 42 of shutter member 27 is also essentially free of dynamic fluid forces. Therefore, the top side of the base plate 31 of shutter member 27 is exposed to (essentially only) the static fluid pressure in the orifice 33 region/the fluid outlet chamber 26 region of the constant differential pressure valve 3 of control valve arrangement 1.

On the other surface side of the bottom plate 31, the bottom plate 31 faces pressure reference chamber 34. The pressure reference chamber 34 is fluidly connected to the pressure in the fluid inlet channel 5 by means of a pressure reference conduit 35 (see also Fig. 1).

To avoid any fluid flow throughput between pressure reference chamber 34 and fluid outlet chamber 26/inner volume 42 of shutter member 27 via gap 37, a flexible membrane 32 is provided that is sealing off the two volume parts 34, 26 of the constant differential pressure valve 3. It is to be noted that no grinding sealing contact is thus present. Therefore, the regulating preciseness of constant differential pressure valve 3 may be increased.

As can further be seen in Figs. 1, 7 and 8, the shutter member 27 comprises two different shutter member parts 29, 30 with somewhat different radii. This way, the width of the remaining gap 37 towards the interconnecting fluid channel 35 can be reduced, and nevertheless the required bending radius of membrane 32 can be maintained at a sufficiently large size to avoid any early fatigue of the membrane 32.

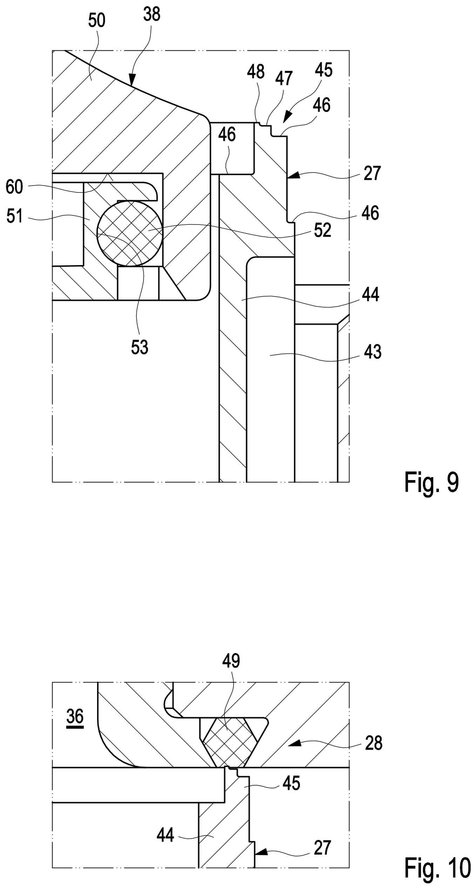

In Figs. 9 to 12, more details of the shutter member 27 can be seen.

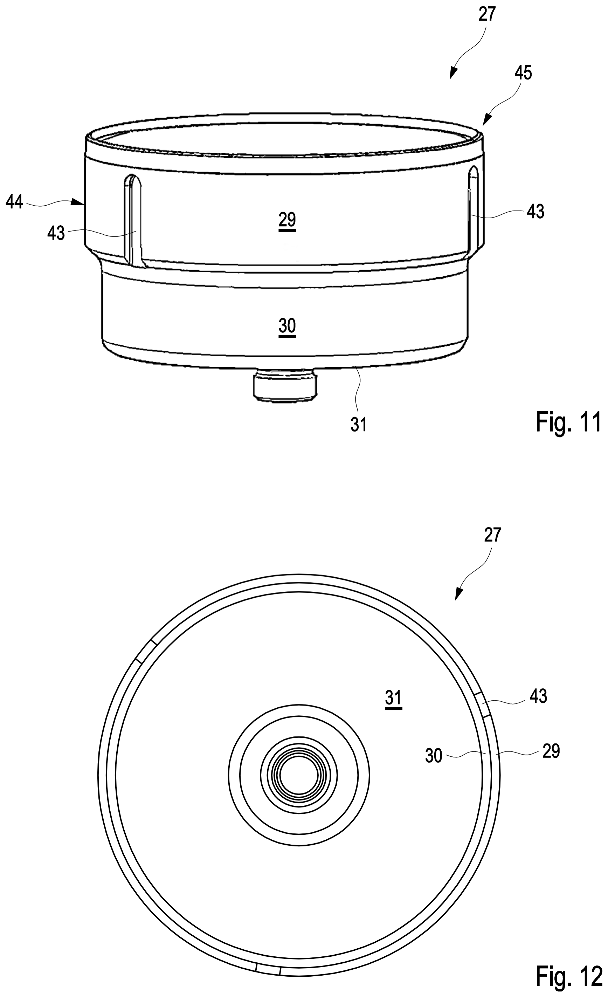

In Figs. 11 and 12, the shutter member 27 can be seen in the different views from different directions, namely in Fig. 11 in a perspective view that shows essentially the side surface of the shutter member 27, while in Fig. 12, a view onto the bottom side of shutter member 27 is visible.

In particular, the cup-shaped form of the shutter member 27 with a base plate 31 and shutter member sidewalls 44 that are divided into two sidewall parts 29, 30 with different radii is clearly visible.

Furthermore, in Figs.11 and 12, presently three side grooves 43 are visible that are presently arranged in the sidewall part 29 of shutter member 27 with a larger radius, i.e. in the upper part 29 of the shutter member 27 that is directed towards the valve seat 28 of constant differential pressure valve 3. The axial length of the side grooves 43 is presently chosen to be approximately 80% of the axial extent of the upper part 29 of shutter member 27. Since in the presently shown embodiment, the upper and lower shutter member parts 29, 30 are about of the same height, this translates to the fact that the axial extent of the side grooves 43 equals about 40% of the overall height of the sidewalls 44 of shutter member 27.

In the present embodiment, the side grooves 43 are placed at equidistant angular positions. Since three side grooves 43 are present, this means that there is a 120° angle between two neighbouring side grooves 43.

Thanks to the side grooves 43, the oscillating behaviour of the shutter member 27, in particular its resonance frequency, changes. By a suitable sizing and arrangement of the side grooves 43 it is possible to set the resonance frequency of shutter member 27 to a frequency that is not generated by the fluid flux through the control valve arrangement 1/the constant differential pressure valve 3, at least under reasonable operating conditions. This way, a severe factor of generating acoustic noise can be advantageously avoided.

Figs. 9 and 10 show enlarged views of the upper ends 45 of the sidewalls 44 of shutter member 27 in schematic cross sections. In particular, Fig. 9 shows the shutter member 27 in an open position of the constant differential pressure valve 3, while Fig. 10 shows the shutter member 27 in a closed position of the constant differential pressure valve 3.

As can be seen, in the upper end region 45 of the sidewalls 44 of shutter member 27, the thickness of the sidewalls 44 is reduced in several steps 46 when going toward the front face 47. In the presently shown embodiment, the steps are essentially rectangular steps 46. It is of course noted that due to material properties and the machining or other production techniques, a perfect perpendicular angle can never be realised.

As first experiments clearly indicate, these steps 46 on the sidewalls 44 of shutter member 27 result in a significant reduction of fluid generated noise when fluid flows through the orifice region 33 of constant differential pressure valve 3.

Another feature can be seen at the front face 47 in the upper end region 45 of the sidewalls 44 of shutter member 27. Here, a web-like protrusion 48 with a small thickness and a limited height protrudes from the face end 47 of shutter member 27.

Like it is the case with the other steps 46, this design results in a reduction of fluid generated noise.

More important, however, is that this web-like protrusion 48 pushes into an elastic sealing member 49 that is provided in the valve seat part 28 of constant differential pressure valve 3, if the constant differential pressure valve 3 is closed. This way, a fluid tight sealing can be achieved quite easily. Presently, the elastic sealing member 49 is provided in form of a rubber ring (although different materials may be used as well).

To avoid any damage of the elastic sealing member 49 and/or of an early wear thereof, the web like protrusion 48 protrudes only slightly from the flat face 47. Further, the overall surface of the front face 47 that faces the elastic sealing member 49 is presently about three times larger as the surface area of the web-like protrusion 48 that contacts the elastic sealing member 49. This way, the front face 47 acts as a movement limiting device, so that the pressure onto the elastic sealing member 49 can be advantageously reduced.

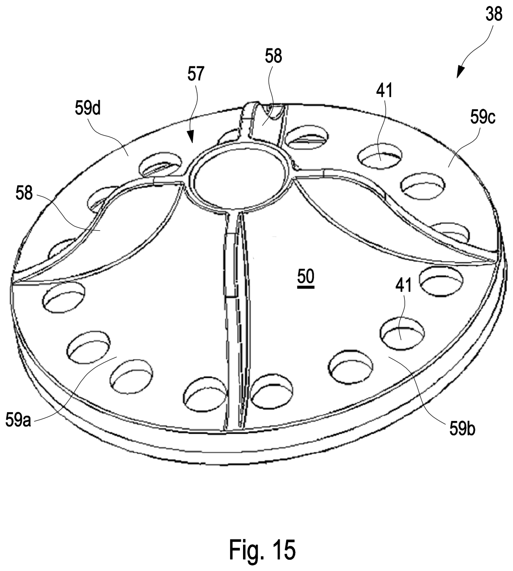

In Figs. 13 to 15, more details about the bell-shaped fluid guiding plate 38 of the constant differential pressure valve part 3 of the control valve arrangement 1 is shown. In particular, Fig. 13 shows a schematic cross-section through the constant differential pressure valve part 3 of the control valve arrangement 1; Fig. 14 shows a schematic perspective view onto the bell-shaped fluid guiding plate 38 when mounted in the constant differential pressure valve 3 and Fig. 15 shows a perspective view of the bell-shaped fluid guiding plate 38 alone (in particular the upper subunit 50 thereof). **It** is to be noted that Fig. 13 is somewhat similar to Fig. 8; however, in Fig. 8 the focus of the drawing is directed to different aspects of the valve arrangement 3, so that some parts are additionally shown in Fig. 8 (as compared to Fig. 13), while other parts are deliberately not shown in Fig. 8 (as compared to Fig. 13).

As can be seen, bell-shaped fluid guiding plate 38 is presently designed to comprise two subunits, namely an upper subunit 50 and a lower subunit 51. Both subunits 50, 51 are presently made of a fibre reinforced plastics material. The two subunits 50, 51 of bell-shaped fluid guiding plate 38 are presently connected to each other in a force fit way (where due to the design of the two subunits 50, 51, there is also a closest possible distance, when respective neighbouring surfaces contact each other, which is obvious to a person skilled in the art). The force fit connection between the two subunits 50, 51 is presently effectuated by means of a rubber O-ring 52. Rubber O-ring 52 is arranged in a circular groove 53 that is arranged on the radially outside surface of second, lower subunit 51 of bell-shaped fluid guiding plate 38. As can be seen, the rubber O-ring 52 is held in place inside of the circular groove 53 through a positive form locking connection. On the other side, rubber O-ring 52 is in a grinding contact with the radially inner surface of ring-like extension 54 of upper subunit 50 of bell-shaped fluid guiding plate 38. The outside surface of lower subunit 51 and the inside surface of upper subunit 50 do show a certain play relative to each other. Therefore, a certain movement in a plane that is perpendicular to the axial direction, and also a certain axial movement is possible between upper subunit 50 and lower subunit 51 of bell-shaped fluid guiding plate 38. This way, a mechanical decoupling between both subunits 50, 51 is possible, so that noise that is created by fluid passing through the constant differential pressure valve 3 can be surprisingly significantly dampened.

It is to be noted that according to first experiments, it is surprisingly not necessary to apply dampening material at the interfacing surface 60 between upper subunit 50 and lower subunit 51 of bell-shaped fluid guiding plate 38 (interfacing surface 60 is essentially equal to a plane that lies normal to the axial direction of connecting shaft 55). Nevertheless, it is of course possible to provide a dampening material even there, for example by applying a thin rubber coating.

The two subunits 50, 51 of bell-shaped fluid guiding plate 38 are connected via the connecting shaft 55 to the housing 4 of constant differential pressure valve 3, and hitherto of control valve arrangement 1. The connection shaft 55 also serves as an axial guide for an axial movement of shutter member 27. Furthermore, a helical spring 56 is provided that pushes the two subunits 50, 51 of bell-shaped fluid guiding plate 38 and shutter member 27 away from each other. Therefore, the constant differential pressure valve 3 has a tendency to open itself in a fluidly unbiased condition, at least in the presently shown embodiment.

As can be seen, in particular from Fig. 15, the upper surface 57 of upper subunit 50 of bell-shaped fluid guiding plate 38 shows an essentially hyperboloidal shape. This way, fluid that is entering the constant differential pressure valve 3 through interconnecting fluid channel 36 is guided to the radial outside. In case the shutter member 27 is in its open position, a large fluid flux with little turbulence can be realised (see Fig. 8) through the constant differential pressure valve 3. If the shutter member 27 is (partially) closed, however, the upper surface 57 of upper subunit 50 at least serves as a flow guide in a way, that no fluid dynamic forces act on the shutter member 27 in an axial direction, in particular on the base plate 31 of shutter member 27, so that (essentially) no tendency to open the shutter member 27 is induced. Therefore, the regulatory behaviour of constant differential pressure valve 3 can be improved.

Another feature of upper subunit 50 of bell-shaped fluid guiding plate 38 are the protruding fluid flow separating walls that are arranged on the surface 57 of upper subunit 50 in an axially protruding way. Presently, four protruding fluid flow separating walls 58 are provided. They divide the overall surface 57 into altogether four fluid flow sections 59a to 59d. Thanks to the protruding fluid flow separating walls 58, a significant amount of turbulence is avoided when the fluid flows along upper surface 57 of upper subunit 50. **It** is to be noted, that certainly a different number of protruding fluid flow separating walls 58 may be provided as well.

Furthermore, a number of bores 51 is arranged in both parts of upper subunit 50 and lower subunit 51 of bell-shaped fluid guiding plate 38. As already mentioned, those bores 51 allow fluid to flow into and out of inner volume 42 of cup-shaped shutter member 27 when the shutter member 27 moves axially up and down (and relatively to bell-shaped fluid guiding plate 38, thus increasing and decreasing inner volume 42).

It is noted that identical reference numerals are used throughout the present disclosure for parts that are sufficiently similar in design and/or in function to justify the use of identical reference numerals, although the respective parts may not be identical. This is done for brevity and to improve the understandability of the description.

Additional information may be retrieved from the other applications from the series of applications that are filed on the same date by the same applicant under the applicant's reference numbers DAN2420DEEP (PA18799EP01) and DAN2423DEEP (PA18801EP01).

It is also to be noted that a single one or a plurality of the features of one, several or all of the presently disclosed detailed embodiments may be used in combination with the generic description of the present disclosure (even across the present and the other aforementioned applications).

## Claims

1. Housing (4) for a variable fluid flow throughput valve arrangement (3), preferably for a constant differential pressure valve arrangement (3), the housing (4) comprising a fluid transfer chamber (26) for the shutter member (27) of the variable fluid flow throughput valve arrangement (3), **characterised by** a shielding wall member (39) between the fluid transfer chamber (26) and the shutter member (27), wherein the shielding wall member (39) is designed and arranged in a way that it at least significantly reduces dynamic fluid flow forces in the gap (37) between the shielding wall member (39) and the shutter member (27).

2. Housing (4) according to claim 1, **characterised in that** the fluid transfer chamber (26) and/or the shutter member (27) are designed and arranged circumferentially.

3. Housing (4) according to any of the preceding claims, in particular according to claim 2, **characterised in that** the fluid transfer chamber (26) is designed and arranged as a toroid-shaped chamber (26) and/or **in that** the shutter member (27) is designed and arranged as an essentially rotationally symmetric member (27), preferably as a cup-shaped member (27).

4. Housing (4) according to any of the preceding claims, **characterised in that** the housing (4) around the fluid transfer chamber (26) and the shielding wall member (39) is designed and arranged as a single piece body.

5. Housing (4) according to any of the preceding claims, in particular according to claim 4, **characterised in that** it is produced by at least a casting step, possibly by a casting step with a consecutive material removing manufacturing step.

6. Housing (4) according to any of the preceding claims, in particular according to claim 5, **characterised in that** the housing (4) comprises a metal or a metal alloy, at least in the vicinity of the circumferentially arranged fluid transfer chamber (26).

7. Housing (4) according to any of the preceding claims, **characterised in that** the fluid outlet chamber (26) comprises a fluid conduit (5) that is mainly aligned in a radial direction, possibly comprising a tilting angle towards the axial direction and/or towards the tangential direction, wherein at least one tilting angle is preferably an acute angle.

8. Housing (4) according to any of the preceding claims, **characterised in that** the height of the shielding wall member (39) is between 30 and 70%, preferably between 40 and 60%, even more preferably between 45% and 55% of the height of the fluid outlet chamber (26) surrounding the shielding wall member (39).

9. Variable fluid flow throughput valve arrangement (3), in particular constant differential pressure valve arrangement (3), **characterised by** a shutter member (27) and a housing (4) according to any of the preceding claims.

10. Variable fluid flow throughput valve arrangement (3) according to claim 9, **characterised in that** the shutter member (27) comprises at least two sections (29, 30) with different radii, in particular at least two cylinder barrel like shaped sections (29, 30) with different radii.

11. Variable fluid flow throughput valve arrangement (3) according to claim 9 or 10, in particular according to claim 10, **characterised in that** the constant differential pressure valve (3), in particular the height of the shielding wall member (39) and the position of the change of the radius of the shutter member (27) are designed and arranged in a way that the shielding wall (39) covers the larger sized part (29) of the shutter member (27) in any position of the shutter member (27).

12. Variable fluid flow throughput valve arrangement (3) according to any of claims 9 to 11, **characterised in that** the shutter member (27) fluidly separates a fluid transfer chamber (26, 42) and a pressure reference chamber (34), wherein preferably a flexible membrane (32) is provided between the shutter member (27) and the housing (4).

13. Variable fluid flow throughput valve arrangement (3) according to any of claims 9 to 12, **characterised in that** the shutter member (27) is designed and arranged to move in an axial direction.

14. Control valve arrangement (1) comprising at least one variable fluid flow throughput valve arrangement (3) and/or at least one additional valve arrangement (2), preferably at least one variable fluid flow throughput valve arrangement (3) and at least one poppet valve arrangement (2), **characterised in that** the variable fluid flow throughput valve arrangement (3) is designed and arranged as a variable fluid flow throughput valve arrangement (3) according to claim 11 or 12.
